# FASCICULE DE BREVET EUROPEEN

(11) **EP 3 635 615 B1**
(45) Date de publication et mention de la délivrance du brevet: **09.08.2023**
(21) Numéro de dépôt: 18736974.9
(22) Date de dépôt: 18.05.2018
(51) Int. Cl.: G06V 10/82, G06V 20/56

(54) **PROCEDE DE DETERMINATION DU TYPE DE ROUTE SUR LAQUELLE EVOLUE UN VEHICULE**
VERFAHREN ZUR BESTIMMUNG DES STRASSENTYPS, AUF DEM EIN FAHRZEUG FÄHRT
METHOD FOR DETERMINING THE TYPE OF ROAD ON WHICH A VEHICLE IS TRAVELLING

(30) Priorité: 06.06.2017 FR 1754975
(43) Date de publication de la demande: 15.04.2020
(73) Titulaire: PSA Automobiles SA, 78300 Poissy (FR)
(72) Inventeur: BERTRAND, David, 25000 Besancon (FR)
(86) Numéro de dépôt international: PCT/FR2018/051208
(87) Numéro de publication internationale: WO 2018/224750

(56) Documents cités:
- KR-A- 20170 048 029
- US-A1- 2005 159 851
- US-B1- 9 286 524
- MENDES CAIO CESAR TEODORO ET AL: "Exploiting fully convolutional neural networks for fast road detection", 2016 IEEE INTERNATIONAL CONFERENCE ON ROBOTICS AND AUTOMATION (ICRA), IEEE, 16 mai 2016 (2016-05-16), pages 3174-3179, XP032908556, DOI: 10.1109/ICRA.2016.7487486

## Description

L'invention concerne les véhicules pour lesquels il est important de pouvoir identifier le type de route sur laquelle évolue un véhicule et notamment un véhicule autonome ou semi-autonome.

Elle concerne plus précisément un procédé de détermination du type de route sur laquelle évolue le véhicule à partir d'une pluralité d'images acquises de la route.

On entend par véhicule autonome ou semi-autonome, un véhicule pour lequel le conducteur a délégué totalement ou partiellement la conduite et donc la responsabilité associée, au véhicule

Il est alors nécessaire de s'assurer pendant la phase d'autonomie que le véhicule roule bien sur un tronçon de route adapté à l'enclenchement de cette phase, typiquement une route à chaussées séparées du type voie rapide ou autoroute.

Les approches actuelles utilisent une méthode de localisation et de positionnement du véhicule sur une voie de circulation, typiquement par GPS (Global Positionning System) associée à une cartographie, pour s'assurer que le véhicule roule bien sur une voie adaptée à une conduite autonome

Toutefois, la précision du GPS est parfois insuffisante et cette méthode à elle seule ne garantit pas une fiabilité suffisante. En effet, il arrive parfois qu'une petite route, à double sens, longe une autoroute. Une faible erreur de positionnement pourrait alors amener à permettre l'activation de la fonction de conduite autonome, le véhicule roulant sur la petite route, mais se croyant sur l'autoroute.

De manière classique, un autre système de confirmation du type de route est alors adjoint au positionnement. Il utilise classiquement des éléments perçus par différents systèmes de capteurs du véhicule, par exemple des caméras. Il est ainsi possible de détecter si des panneaux de signalisation routière, ou d'autres éléments caractérisant la route (des marquages au sol par exemple), correspondent bien à une autoroute ou route à chaussée séparée, permettant l'activation de la phase de conduite autonome. Le document US 9 286 524 B1 divulgue un tel exemple de détection de marquage au sol.

Là encore, cette approche qui utilise des éléments précis de l'environnement, est souvent mise en défaut, par exemple dans les configurations suivantes :
- Dans certaines circonstances atmosphériques (brouillard, ...) ;
- Lorsque les moyens de signalisation sont occultés, par exemple à cause de la présence d'autres véhicules (camion, caravane, ...)

La présente invention vise à fournir une solution fiable permettant de confirmer, à l'aide des images perçues par une caméra d'un véhicule, que ce véhicule roule bien sur une route à chaussée séparée. Plutôt que d'utiliser la détection d'éléments caractéristiques prédéfinis, l'invention propose d'utiliser une approche par apprentissage (de type Machine Learning) qui présente l'intérêt d'analyser la scène de roulage dans son ensemble.

A cet effet, selon un premier aspect, l'invention concerne un procédé de détermination du type de route sur laquelle évolue un véhicule à partir d'une pluralité d'images acquises de la route, ledit procédé comportant une première phase préalable comportant :
- une première étape de capture d'une pluralité d'images représentatives des types de routes sur lesquelles doit évoluer le véhicule ;
- une deuxième étape de prétraitement des images acquises à la première étape consistant à formater et coder les images suivant un format et un codage déterminés ;
- une troisième étape consistant, à partir des images acquises dans la première étape et prétraitées à la deuxième étape, à associer à chaque image capturée, un type de route définie à partir d'une liste déterminée de types de routes, pour constituer une base d'apprentissage ;
- une quatrième étape d'apprentissage mettant en oeuvre un réseau de neurone à convolution profond recevant itérativement en entrée un couple de données (image capturée, type de route) de la base d'apprentissage et optimisant les coefficients du réseau de neurone ;
ledit procédé comportant une seconde phase d'implémentation dans laquelle, les coefficients optimisés dans l'étape d'apprentissage, sont entrés comme paramètres dans un calculateur du véhicule implémentant ledit réseau de neurones et qui à partir des images acquises par au moins un dispositif de capture d'images du véhicule et des coefficients optimisés, délivre une estimation de type de route sur laquelle évolue le véhicule. Les types de routes pris en compte par le réseau de neurones sont:
- Route à chaussée non séparée avec une voie dans le sens de circulation du véhicule ;
- Route à chaussée non séparée avec deux voies dans le sens de circulation du véhicule ;
- Route à chaussée séparée avec une voie dans le sens de circulation du véhicule ;
- Route à chaussée séparée avec une voie dans le sens de circulation du véhicule et une voie d'accélération ;
- Route à chaussée séparée avec deux voies dans le sens de circulation du véhicule ;
- Route à chaussée séparée avec deux voies dans le sens de circulation du véhicule et une voie d'accélération ;
- Route à chaussée séparée avec trois voies dans le sens de circulation du véhicule ; ou
- Route à chaussée séparée avec trois voies dans le sens de circulation du véhicule et une voie d'accélération.

Selon une caractéristique, l'étape de prétraitement consiste à exclure les zones des images faussement corrélées au type de route pour ne retenir que les éléments représentatifs du type de route.

Selon une autre caractéristique, le réseau de neurones comporte :
- plusieurs couches de convolution destinées à filtrer et déterminer les éléments caractéristiques de l'image ainsi qu'à réduire l'étendue spatiale de l'image ;
- une ou plusieurs couches complètement connectées réalisant une classification de la route dans un nombre limité déterminé de types de route ; la dernière couche étant traitée à l'aide d'une fonction de type « SoftMax » permettant d'estimer les probabilités d'appartenance à chaque type : une probabilité comprise entre 0 et 1 est associée à chaque catégorie, la somme de ces probabilités valant 1.

Selon une autre caractéristique, la réduction de l'étendue spatiale de l'image met en oeuvre l'application de noyaux de convolution suivie de l'application d'une fonction d'activation de type « RELU ».

Selon une autre caractéristique, la réduction de l'étendue spatiale de l'image met en oeuvre une opération de « pooling ».

Selon un deuxième aspect, l'invention concerne un véhicule automobile à conduite autonome ou semi-autonome, comportant au moins un dispositif de capture d'images et un calculateur implémentant le réseau de neurone mettant en oeuvre un procédé tel que décrit ci-dessus.

Par rapport aux autres approches existantes, la démarche présente les avantages suivants :
Il n'est pas nécessaire de définir un ensemble d'éléments caractéristiques a priori (panneaux, lignes, ...) Le module d'apprentissage, à base de réseau de neurones, apprend seul les éléments caractéristiques dans les exemples qui lui sont présentés.

Il n'est pas nécessaire de définir des règles basées sur ces éléments caractéristiques ou sur l'enchainement de leur détection pour définir le type de route. La combinatoire et la gestion des différentes combinaisons d'éléments caractéristiques sont prises en compte par le module apprentissage

Le procédé selon l'invention ne nécessite pas des images très définies en entrée du traitement. La résolution, donc le volume de données, et la bande passante nécessaire, sont réduits. Cela permet donc aussi une implémentation compatible avec des microprocesseurs standards.

Le procédé selon l'invention est plus robuste que les procédés décrits ci-dessus et permet de déterminer le type de route, même en l'absence de tout panneau, ... comme un conducteur classique peut le faire en roulant.

D'autres caractéristiques et avantages de l'invention apparaîtront plus clairement à l'examen de la description détaillée ci-après, et des dessins annexés, sur lesquels :
- la figure 1 illustre les principales étapes du procédé selon l'invention ; et
- la figure 2 illustre schématiquement une des étapes du procédé selon l'invention.

Le procédé selon l'invention utilise un traitement global des images captées par la caméra frontale CAM du véhicule V (cette caméra est généralement disposée en haut de parebrise) pour déterminer le type de route sur lequel celui-ci évolue. D'autres caméras peuvent être utilisées (caméra de recul, etc.).

Il s'appuie sur une approche par apprentissage qui permet d'entrainer un réseau de neurones RN à différentier les types de route. Lors de l'étape d'apprentissage, le réseau évolue pour apprendre à reconnaitre un ensemble d'éléments caractéristiques qui permettent de confirmer le type de route.

La manière d'obtenir les informations d'apprentissage peut différer (tout en étant compatible) avec la manière d'utiliser le réseau sur le véhicule (par exemple, on peut entrainer le réseau avec des données issues d'une caméra de type 'labo', et utiliser une caméra optimisée pour le véhicule pour l'utilisation du réseau de neurones).

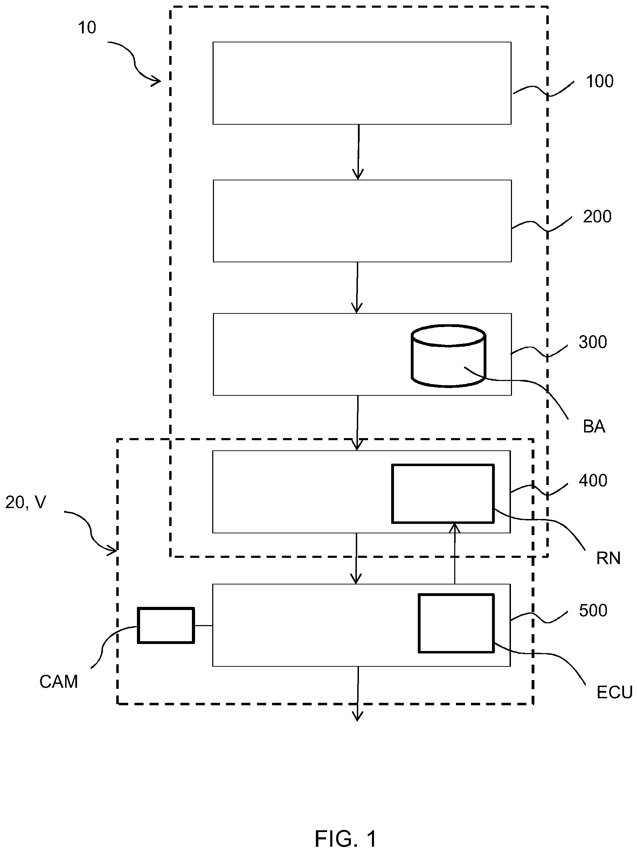

Le procédé est décrit ci-après en référence au schéma bloc de la figure 1.

Dans une première phase 10, préalable à l'implémentation en temps réel du réseau de neurones RN en situation réel du véhicule, le procédé comporte les étapes suivantes.

Dans une première étape 100, le procédé consiste à enregistrer un volume important d'images représentatives de types de route couramment empruntés par un véhicule.

Dans une deuxième étape 200 dite de prétraitement, les images acquises à la première étape 100, sont formatées et codées suivant un format et un codage déterminés.

Dans une troisième étape 300, le procédé consiste, à partir des images acquises dans la première étape 100 et prétraitées à la deuxième étape 200, à associer (par exemple par action humaine) à chaque image capturée, un type de route défini à partir d'une liste déterminée de types de routes.

L'ensemble des données correspondant aux couples (image, type de route) constitue une base d'apprentissage BA. Elle est constituée idéalement de plusieurs milliers ou dizaines de milliers de couples (image, type de route)

Dans une quatrième étape, dite d'apprentissage 400, le procédé met en oeuvre le réseau de neurone RN qui est un réseau de neurones à convolution profond et qui reçoit itérativement en entrée, un couple de données (image capturée, type de route) de la base d'apprentissage BA avec optimisation des coefficients du réseau de neurone RN.

Pour cela, le procédé met en oeuvre, par exemple, un algorithme itératif du type « algorithme du gradient » avec une approche dite par « descente du gradient » et « back-propagation », pour rechercher les coefficients du réseau de neurones RN permettant d'obtenir la meilleure performance de classification. L'algorithme d'optimisation traite les couples (image, type de route) à chaque itération pour permettre la mise à jour des coefficients du réseau de neurones RN.

Ce processus d'optimisation itératif des coefficients est répété jusqu'à obtenir une convergence de l'algorithme. On parle alors de coefficients « convergés ».

La base d'apprentissage BA peut être également issue de bibliothèques logicielles spécialisées déjà préconstituées.

A l'issue de cette première phase 10 préalable, le procédé consiste dans une deuxième et dernière phase 20, à implémenter en temps réel le réseau de neurones RN en situation réel du véhicule V.

Dans une dernière étape 500, dite d'implémentation, les coefficients « convergés » issus de l'étape d'apprentissage 400, sont figés et utilisés comme paramètres d'entrée d'un calculateur ECU embarqué dans le véhicule V. Le calculateur ECU implémente le réseau de neurones RN qui, à partir des images acquises par un dispositif de capture d'images CAM du véhicule V et des coefficients « convergés », délivre une estimation fiable du type de route sur laquelle évolue le véhicule V, en temps réel.

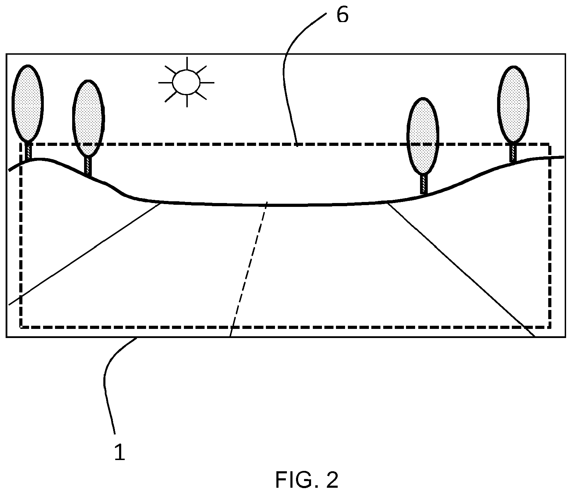

La figure 2 illustre plus en détail, le traitement réalisé dans la première étape 100. L'image 1 est d'abord redimensionnée pour obtenir une image de manière préférentielle mais pas impérativement avec un codage des composantes couleurs « RGB » acronyme anglo-saxon pour « *Red, Green, Blue »* ou RVB (Rouge Vert Bleu) en français, désignant les systèmes de codage informatique des couleurs, le plus proche du matériel. La taille de l'image s'exprime en nombre de pixels et plus précisément par le produit de sa hauteur h et de sa largeur l, par exemple 64 x 320 pixels. (h = 64 et l = 320)

Le procédé ne retient que la zone de l'image 6 qui contient au moins tous les éléments qui a priori semblent importants pour déterminer le type de route. Elle exclut en outre les zones qui seraient susceptibles d'induire des éléments faussement corrélés au type de route. En pratique, mais de façon non limitative, le procédé ne retient que la partie de l'image qui représente la chaussée en la stoppant en dessous de la ligne d'horizon pour exclure le ciel.

Les valeurs de chaque composante de l'image, ou canal, (R, G, B) sont ensuite normalisées pour obtenir des valeurs situées entre 0 et 1. Cette image prétraitée constitue les données d'entrée du réseau de neurones RN.

Le réseau de neurones RN utilisé est un réseau de neurones à convolution ayant de manière préférée mais non impérative la structure suivante.

Le réseau de neurones RN comporte :
- plusieurs couches de convolution destinées à filtrer et déterminer les éléments caractéristiques de l'image ainsi qu'à réduire l'étendue spatiale de l'image. Pour cela, il met en oeuvre l'application de noyaux de convolution (typiquement mais non exclusivement 5x5) suivie de l'application d'une fonction d'activation de type RELU (REctified Linear Unit) : les valeurs négatives sont forcées à 0 et les valeurs positives inchangées). Une opération de « pooling » (réduction de la taille par moyennage ou calcul de maximum local, par exemple sur une zone 2x2) peut aussi être effectuée ;
- Une ou plusieurs couches complètement connectées réalisant une classification de la scène dans un nombre limité de type de route. La dernière couche est traitée à l'aide d'une fonction de type « SoftMax » permettant d'estimer les probabilités d'appartenance à chaque type de route. Une probabilité comprise entre 0 et 1 est associée à chaque type de route. La somme de ces probabilités valant 1.

Les types de route sont définis de la façon suivante :
- Route à chaussée non séparée, une voie dans notre sens ;
- Route à chaussée non séparée, deux voies dans notre sens ;
- Route à chaussée séparée, une voie dans notre sens ;
- Route à chaussée séparée, une voie dans notre sens + une voie d'accélération ;
- Route à chaussée séparée, deux voies dans notre sens ;
- Route à chaussée séparée, deux voies dans notre sens + une voie d'accélération ;
- Route à chaussée séparée, trois voies dans notre sens ;
- Route à chaussée séparée, trois voies dans notre sens + une voie d'accélération

Le nombre et le type de route peut bien sûr être étendu

Au-delà de la variante préférée présentée, différentes variantes d'architecture de réseau peuvent être utilisées en faisant varier de manière proposée mais non exhaustive :
- le nombre de canaux de l'image d'entrée (Noir et blanc : 1 canal, couleur RGB : 3 canaux, couleur dans d'autres espaces chromatiques, ...) ;
- le nombre de couches de type convolution et leurs caractéristiques ;
- la taille des noyaux de convolution utilisés de manière pratique, souvent 3x3, 5x5 ou 7x7 ;
- la réduction de la taille spatiale par « pooling » ou éventuellement en jouant sur des sauts de position (« stride ») des noyaux de convolution ;
- le nombre de couches complètements connectées ;
- le nombre de neurones sur chaque couche complètement connectée ;
- le nombre de catégories en sortie du réseau ;

Ces différentes variantes permettent de régler un compromis entre la performance et le temps de calcul nécessaire, de manière à adapter le procédé aux caractéristiques en termes de puissance de calcul du calculateur embarqué ECU.

La mise en oeuvre pratique peut d'ailleurs faire appel à différents types d'implémentations, utilisant des représentations numériques variées. Les représentations par des nombres réels flottants en 32 bits permettent une meilleure précision, mais ont l'inconvénient de générer des calculs nombreux. L'implémentation sera donc de manière préférée orientée vers l'utilisation de représentations plus compactes du type nombres réels flottants sur 16 bits ou même entiers sur 16 ou 8 bits.

## Revendications

1. Procédé de détermination du type de route sur laquelle évolue un véhicule à partir d'une pluralité d'images acquises de la route, ledit procédé comportant une première phase (10) préalable comportant :
- une première étape (100) de capture d'une pluralité d'images représentatives des types de routes sur lesquelles doit évoluer le véhicule ;
- une deuxième étape de prétraitement (200) des images acquises à la première étape (100) consistant à formater et coder les images suivant un format et un codage déterminés ;
- une troisième étape (300) consistant, à partir des images acquises dans la première étape (100) et prétraitées à la deuxième étape (200), à associer à chaque image capturée, un type de route définie à partir d'une liste déterminée de types de routes, pour constituer une base d'apprentissage (BA) ;
- une quatrième étape d'apprentissage (400) mettant en oeuvre un réseau de neurone à convolution profond (RN) recevant itérativement en entrée un couple de données comprenant l'image capturée et le type de route associé tet de la base d'apprentissage (BA) et optimisant les coefficients du réseau de neurone (RN) ;
ledit procédé comportant une seconde phase (20) d'implémentation (500) dans laquelle, les coefficients optimisés dans l'étape d'apprentissage (400), sont entrés comme paramètres dans un calculateur (ECU) du véhicule (V) implémentant ledit réseau de neurones (RN) et qui à partir des images acquises par au moins un dispositif de capture d'images (CAM) du véhicule (V) et des coefficients optimisés, délivre une estimation de type de route sur laquelle évolue le véhicule (V) ;
les types de routes pris en compte par le réseau de neurones (RN) sont:
- Route à chaussée non séparée avec une voie dans le sens de circulation du véhicule ;
- Route à chaussée non séparée avec deux voies dans le sens de circulation du véhicule ;
- Route à chaussée séparée avec une voie dans le sens de circulation du véhicule ;
- Route à chaussée séparée avec une voie dans le sens de circulation du véhicule et une voie d'accélération ;
- Route à chaussée séparée avec deux voies dans le sens de circulation du véhicule ;
- Route à chaussée séparée avec deux voies dans le sens de circulation du véhicule et une voie d'accélération ;
- Route à chaussée séparée avec trois voies dans le sens de circulation du véhicule ; ou
- Route à chaussée séparée avec trois voies dans le sens de circulation du véhicule et une voie d'accélération.

2. Procédé selon la revendication précédente, **caractérisé en ce que** l'étape de prétraitement (200) consiste à exclure les zones des images faussement corrélées au type de route pour ne retenir que les éléments représentatifs du type de route.

3. Procédé selon l'une des revendications précédentes, **caractérisé en ce que** le réseau de neurones (RN) comporte :
- plusieurs couches de convolution destinées à filtrer et déterminer les éléments caractéristiques de l'image ainsi qu'à réduire l'étendue spatiale de l'image ;
- une ou plusieurs couches complètement connectées réalisant une classification de la route dans un nombre limité déterminé de types de route ; la dernière couche étant traitée à l'aide d'une fonction de type « SoftMax » permettant d'estimer les probabilités d'appartenance à chaque type : une probabilité comprise entre 0 et 1 est associée à chaque catégorie, la somme de ces probabilités valant 1.

4. Procédé selon la revendication précédente, **caractérisé en ce que** la réduction de l'étendue spatiale de l'image met en oeuvre l'application de noyaux de convolution suivie de l'application d'une fonction d'activation de type « RELU ».

5. Procédé selon la revendication 3, **caractérisé en ce que** la réduction de l'étendue spatiale de l'image met en oeuvre une opération de « pooling ».

6. Véhicule automobile (V) à conduite autonome ou semi-autonome, comportant au moins un dispositif (CAM) de capture d'images et un calculateur (ECU) implémentant le réseau de neurone (RN) mettant en oeuvre un procédé selon l'une des revendications précédentes.

## Patentansprüche

1. Verfahren zur Bestimmung des Straßentyps, auf dem sich ein Fahrzeug bewegt, aus einer Vielzahl von Bildern, die von der Straße aufgenommen wurden, wobei das Verfahren eine erste Vorphase (10) umfasst, die Folgendes umfasst: :
- einen ersten Schritt (100) zur Erfassung einer Vielzahl von Bildern, die repräsentativ für die Straßentypen sind, auf denen sich das Fahrzeug bewegen soll ;
- einen zweiten Schritt der Vorverarbeitung (200) der im ersten Schritt (100) erfassten Bilder, der darin besteht, die Bilder gemäß einem bestimmten Format und einer bestimmten Codierung zu formatieren und zu codieren ;
- einen dritten Schritt (300), der darin besteht, ausgehend von den im ersten Schritt (100) erfassten und im zweiten Schritt (200) vorverarbeiteten Bildern jedem erfassten Bild einen Straßentyp zuzuordnen, der aus einer bestimmten Liste von Straßentypen definiert wird, um eine Lernbasis (BA) zu bilden ;
- einen vierten Lernschritt (400), der ein neuronales Netz mit tiefer Faltung (RN) einsetzt, das iterativ am Eingang ein Datenpaar empfängt, das das erfasste Bild und den zugeordneten Straßentyp der Lernbasis (BA) umfasst, und die Koeffizienten des neuronalen Netzes (RN) optimiert;
wobei das Verfahren eine zweite Phase (20) der Implementierung (500) umfasst, in der die im Lernschritt (400) optimierten Koeffizienten als Parameter in einen Rechner (ECU) des Fahrzeugs (V) eingegeben werden, der das neuronale Netz (RN) implementiert und der anhand der von mindestens einer Bilderfassungsvorrichtung (CAM) des Fahrzeugs (V) erfassten Bilder und der optimierten Koeffizienten eine Schätzung des Straßentyps, auf dem sich das Fahrzeug (V) bewegt, ausgibt;
Die vom neuronalen Netz (NN) berücksichtigten Straßentypen sind:
- Straße mit nicht getrennter Fahrbahn und einer Fahrspur in Fahrtrichtung des Fahrzeugs;
- Straße mit nicht getrennter Fahrbahn und zwei Fahrspuren in Fahrtrichtung des Fahrzeugs;
- Straße mit getrennter Fahrbahn mit einer Fahrspur in Fahrtrichtung des Fahrzeugs;
- Straße mit getrennter Fahrbahn mit einem Fahrstreifen in Fahrtrichtung und einem Beschleunigungsstreifen ;
- Straße mit getrennter Fahrbahn mit zwei Fahrspuren in Fahrtrichtung des Fahrzeugs;
- Straße mit getrennter Fahrbahn mit zwei Fahrspuren in Fahrtrichtung und einer Beschleunigungsspur ;
- Straße mit getrennter Fahrbahn mit drei Fahrspuren in Fahrtrichtung des Fahrzeugs; oder
- Straße mit getrennter Fahrbahn mit drei Fahrstreifen in Fahrtrichtung des Fahrzeugs und einem Beschleunigungsstreifen.

2. Verfahren nach dem vorhergehenden Anspruch, **dadurch gekennzeichnet, dass** der Vorverarbeitungsschritt (200) darin besteht, die Bereiche der Bilder auszuschließen, die fälschlicherweise mit dem Straßentyp korreliert sind, um nur die Elemente zu behalten, die für den Straßentyp repräsentativ sind.

3. Verfahren nach einem der vorhergehenden Ansprüche, **dadurch gekennzeichnet, dass** das neuronale Netz (RN) umfasst:
- mehrere Faltungsschichten zum Filtern und Bestimmen der charakteristischen Elemente des Bildes sowie zum Reduzieren der räumlichen Ausdehnung des Bildes ;
- eine oder mehrere vollständig verbundene Schichten, die eine Klassifizierung der Straße in eine bestimmte begrenzte Anzahl von Straßentypen vornehmen; wobei die letzte Schicht mithilfe einer Funktion vom Typ "SoftMax" verarbeitet wird, mit der die Wahrscheinlichkeiten der Zugehörigkeit zu jedem Typ geschätzt werden können: Jeder Kategorie wird eine Wahrscheinlichkeit zwischen 0 und 1 zugeordnet, wobei die Summe dieser Wahrscheinlichkeiten 1 beträgt.

4. Verfahren nach dem vorhergehenden Anspruch, **dadurch gekennzeichnet, dass** die Reduzierung der räumlichen Ausdehnung des Bildes die Anwendung von Faltungskeimen, gefolgt von der Anwendung einer Aktivierungsfunktion des Typs "RELU", implementiert.

5. Verfahren nach Anspruch 3, **dadurch gekennzeichnet, dass** die Reduzierung der räumlichen Ausdehnung des Bildes eine "Pooling"-Operation implementiert.

6. Autonom oder teilautonom fahrendes Kraftfahrzeug (V) mit mindestens einer Vorrichtung (CAM) zur Bilderfassung und einem Rechner (ECU), der das neuronale Netz (RN) implementiert, das ein Verfahren nach einem der vorhergehenden Ansprüche implementiert.

## Claims

1. A method of determining the type of road on which a vehicle is travelling on the basis of a plurality of images acquired of the road, said method comprising a first preliminary phase (10) comprising :
- a first step (100) of capturing a plurality of images representative of the types of road on which the vehicle is to travel ;
- a second step (200) of pre-processing the images acquired in the first step (100), consisting in formatting and coding the images according to a specified format and coding; and
- a third step (300) consisting, on the basis of the images acquired in the first step (100) and pre-processed in the second step (200), in associating with each captured image a type of road defined from a determined list of types of road, in order to constitute a learning base (BA);
- a fourth learning step (400) implementing a deep convolution neural network (RN) iteratively receiving as input a pair of data comprising the captured image and the associated type of road from the learning base (BA) and optimising the coefficients of the neural network (RN);
said method comprising a second phase (20) of implementation (500) in which the coefficients optimised in the learning step (400) are entered as parameters in a computer (ECU) of the vehicle (V) implementing said neural network (RN) and which,
on the basis of the images acquired by at least one image capture device (CAM) of the vehicle (V) and of the optimised coefficients, delivers an estimate of the type of road on which the vehicle (V) is travelling;
the types of road taken into account by the neural network (RN) are:
- Non-separated carriageway with one lane in the vehicle's direction of travel;
- Non-separated road with two lanes in the vehicle's direction of travel;
- A dual carriageway with one lane in the direction of travel;
- Divided carriageway with one lane in the vehicle's direction of travel and one acceleration lane;
- Divided carriageway with two lanes in the vehicle's direction of travel;
- Divided carriageway with two lanes in the vehicle's direction of travel and one acceleration lane;
- A dual carriageway with three lanes in the direction of travel; or
- A dual carriageway with three lanes in the direction of travel and one acceleration lane.

2. Method according to the preceding claim, **characterised in that** the pre-processing step (200) consists in excluding the areas of the images falsely correlated with the type of road in order to retain only the elements representative of the type of road.

3. Method according to one of the preceding claims, **characterised in that** the neural network (RN) comprises :
- several convolution layers intended to filter and determine the characteristic elements of the image and to reduce the spatial extent of the image ;
- one or more fully-connected layers classifying the road into a given limited number of road types; the last layer being processed using a "SoftMax" type function for estimating the probabilities of belonging to each type: a probability of between 0 and 1 is associated with each category, the sum of these probabilities being equal to 1.

4. Method according to the preceding claim, **characterised in that** the reduction of the spatial extent of the image implements the application of convolution kernels followed by the application of an activation function of the "RELU" type.

5. Method according to claim 3, **characterised in that** the reduction of the spatial extent of the image implements a pooling operation.

6. Autonomous or semi-autonomous motor vehicle (V), comprising at least one image capture device (CAM) and a computer (ECU) implementing the neural network (RN) implementing a method according to one of the preceding claims.
